# EUROPEAN PATENT SPECIFICATION

(11) **EP 3 073 246 B1**
(45) Date of publication and mention of the grant of the patent: **14.08.2019**
(21) Application number: 15161547.3
(22) Date of filing: 27.03.2015
(51) Int. Cl.: G01N 21/76, G01N 15/06, G01N 21/64

(54) **Method and system for simultaneous detection of micro-particle concentration in suspension and their morphological and physiological traits**
VERFAHREN UND SYSTEM ZUR GLEICHZEITIGEN DETEKTION VON MIKROPARTIKELKONZENTRATION IN SUSPENSION UND DEREN MORPHOLOGISCHEN UND PHYSIOLOGISCHEN MERKMALE
PROCÉDÉ ET SYSTÈME POUR LA DÉTECTION SIMULTANÉE DE LA CONCENTRATION DE MICROPARTICULES EN SUSPENSION ET DE LEURS CARACTÉRISTIQUES MORPHOLOGIQUES ET PHYSIOLOGIQUES

(43) Date of publication of application: 28.09.2016
(73) Proprietor: National Institute of Biology, 1000 Ljubljana (SI); Univerza v Ljubljani, 1000 Ljubljana (SI); Arhel, 1210 Ljubljana (SI); Envit, 1000 Ljubljana (SI)
(72) Inventor: SEDMAK, Bojan, 6320 Portoroz (SI); LAKOVIC, Gorazd, 1291 Skofljica (SI); LESTAN, Domen, 1292 Ig (SI); MEGLIC, Andrej, 4290 Trzic (SI); GERL, Marko, 1210 Ljubljana Sentvid (SI)
(74) Representative: Marton, Dan-Robert

(56) References cited:
- US-A1- 2009 283 697
- US-A1- 2013 256 561
- PARESYS G ET AL: "Quantitative and qualitative evaluation of phytoplankton communities by trichromatic chlorophyll fluorescence excitation with special focus on cyanobacteria", WATER RESEARCH, ELSEVIER, AMSTERDAM, NL, vol. 39, no. 5, 1 March 2005 (2005-03-01), pages 911-921, XP027613927, ISSN: 0043-1354 [retrieved on 2005-03-01]
- Bbe Moldaenke: "The Algae Online Analyser", , 31 December 2011 (2011-12-31), pages 1-2, XP055212488, Retrieved from the Internet: URL:http://www.thermofisher.com.au/Uploads /file/Environmental-Industrial/Environment al-Monitoring-Safety/Water-Monitoring-Trea tment/Algae-Monitoring/bbe-Algae-Online-An alyser-Brochure-TFS.pdf [retrieved on 2015-09-10]

## Description

### FIELD OF INVENTION

The present invention relates to method for simultaneous determination of microparticle (micro particle) concentration and their morphological and physiological traits in a sample.

### BACKGROUND OF THE INVENTION

Various optical/flow systems are employed for transporting micro-particles within analytical instruments to the optical analysis area. The sample is channeled through a chamber exposed to excitation source to generate response. In the case of flow cytometry the particles a forced through flow nozzles with severe limitation of particle size frequently resulting in clogging.

There have been some improvements in this area of detection concerning the arrangement in the flow chamber (for instance disclosed in US 2009/0283697 A1). The major limitations of flow cytometry are the small sample volume and the corresponding long detection time in order to obtain reliable information on the average particle population.

Pulse-light emitting sensors are widely used in natural environment to separate fluorescence from natural light. The use of sensors for harmful bloom monitoring has already been proposed as a complementary tool with the classical laboratory analysis (Bastien et al., J. Environ. Monit. 2011, 13: 110-118). Autonomous vessels equipped with fluorescence sensors are in use for *in vivo* monitoring of cyanobacterial blooms. The deployment of such robotic devices allows high spatial resolution, on both vertical and horizontal axes of the water body (Hitz et al., Robotics & Autom. Mag. 2012, 19: 62-72).

The interpretation of data derived from various sensors is mainly used for 2D and 3D spatiotemporal representation of particle distribution.

Pulse amplitude modulated chlorophyll portable fluorometer lab on a chip (LOAC) has been disclosed in US 2013/0256561 said chip being designed to examine photosynthetic performance and stress on micro-particles.

In GB1281748 determining the presence and/or quantity of a fluorescence substance in a volume of water primarily designed for flow-rate measuring is disclosed.

Further a method and apparatus for the detection of living phytoplankton cells in water based on the calculation of variable fluorescence (Fv) or on the determination of the dynamic progress of the fluorescence induction curve is disclosed in HK1132037.

Furthermore a fluorometric method for determining quality parameter of water sample that involves measuring fluorescence intensities of phycocyanin at different wave lengths is disclosed in DE102009036562.

In addition methods for determining micro particle concentrations and micro particle classes are disclosed in PARESYS G ET AL, "Quantitative and qualitative evaluation of phytoplankton communities by trichromatic chlorophyll fluorescence excitation with special focus on cyanobacteria", WATER RESEARCH, ELSEVIER, AMSTERDAM, NL, vol. 39, no. 5, ISSN 0043-1354, (20050301), pages 911 - 921, (20050301), XP027613927 and also in Bbe Moldaenke, "The Algae Online Analyser", (20111231), pages 1 - 2, URL: http://www.thermofisher.com.au/Uploads/file/Environmental-Industrial/Environmental-Monitoring-Safety/Water-Monitoring-Treatment/Algae-Monitoring/bbe-Algae-Online-Analyser-Brochure-TFS.pdf, (20150910), XP055212488. Parensys G. et al discloses multi -wavelength excitation of chlorofyl fluorescence in detection cell to detect phytoplankton biomass and to identify main taxons. An evaluation model to distinguish between cyanobacteria groups is proposed.

Thus, there is no data on direct simultaneous quantitative and qualitative fluorescence data acquisition and interpretation systems and methods on the level of intact micro-particle population.

### SUMMARY OF THE INVENTION

The present invention is defined by the appended independent claims.

Thus a fluorometric method for determination of the presence of organisms, organic and inorganic micro-particles or microparticles in suspension able to absorb radiation of specific wavelengths with the consequent emission of energy, with the simultaneous sensing of their amount, their basic characteristics as size, shape and physiological traits is disclosed.

The method according to the invention is based on maintaining the population of micro-particles in suspension in liquid or gaseous media by generating a steady unidirectional flow of low turbulence that induces their passing the area of detection as an average population.

According to an embodiment of the invention the emission of signals according to the present invention is obtained by using pulse modulated fluorometers with a rapid pulse excitation light of selected wavelength to induce the corresponding emission. The choice of the excitation rate may depend on the size and the speed of particle movement.

According to one embodiment of the invention the excitation and detection are modulated at exactly the same frequency and in turn the emission will be detected immediately.

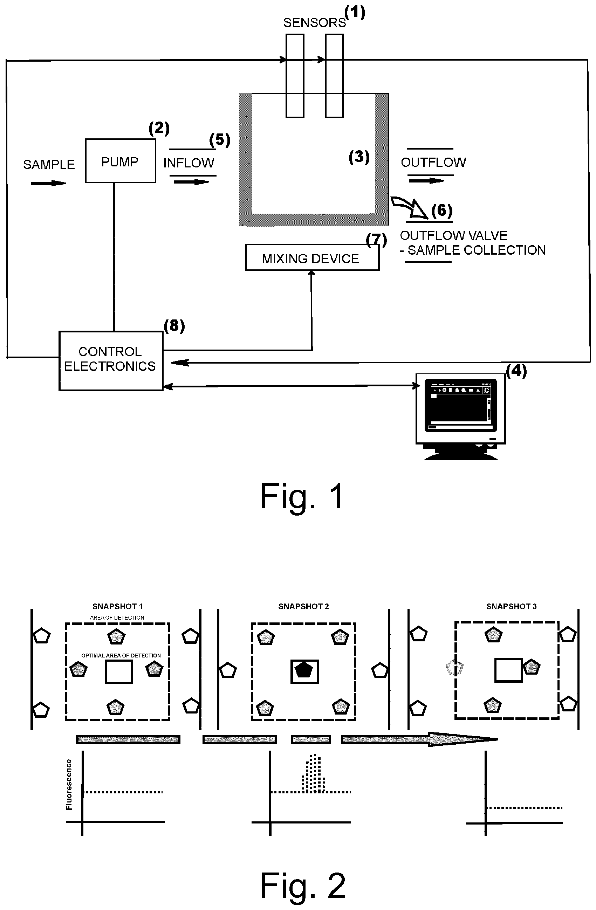

According to the inventive method each time when the average population of fluorogenic particles enters the non-homogenous area of the excitation source emits a fluorescent signal. The average intensity of the signal corresponds to the concentration of particles, while the shape and frequency of the amplitude is the consequence of particular characteristics of fluorophores currently located in the area of maximum sensitivity of the detector (with reference to Fig.2, wherein the principle of the method is disclosed). The emitted signal changes with the speed of movement of the particles, their hydrodynamic size, shape and orientation.

According to the present invention suitable micro-particles for analysis are for instance, but not limited hereto particles that contain natural or artificial pigments able to absorb and consequently emit energy, small organisms that produce and/or contain these pigments or systems containing them, various fluorescent minerals, suspensions of artificial materials which contain or are labelled with such pigments or minerals, particles and organisms exhibiting chemiluminiscence or labelled as such.

Accordingly by using specific excitation wavelengths it is possible to discriminate subpopulations of particles/organisms bearing fluorophores.

Examples of microparticles suitable for detection, but not limited hereto are: prokaryotic and eukaryotic cells as photobionts; phytoplankton, cyanobacteria, vital stained/labelled bacteria and mammalian cells and their structures, fixed biological material pre and post exposure to various experimental conditions, immunostained or otherwise labelled biological or artificial material and fluorescent inorganic particles.

Further according claim 12 a system for simultaneous detection of organisms, inorganic and other fluorescent micro-particles in suspension and their morphological and physiological traits is disclosed.

### EMBODIMENTS

The providing step comprises obtaining said sample by delivering it in said sensing chamber adapted to create a uniform distribution of particles maintaining them in suspension and forcing them in an unidirectional flow that passes said detection system.

The determining step comprises determining the microparticle concentration of said sample on the basis of said average signal intensity that carries a superimposed signal bearing the information about the composition, size, morphological and physiological characteristics of the micro-particles currently located in an optimum signal detection area of said detection system.

According to one embodiment of the invention said simultaneous determination of micro-particles concentration, their basic morphological characteristics and physiological traits is performed in a real time manner on the basis of predetermined digitalized average signal libraries.

Said simultaneous determination is performed by simultaneous detection of stress on optical properties of photobionts on population level of said sample.

According to an embodiment of the invention a homogeneous dispersion and maintenance of said micro-particles in suspension is ensured by inducing an unidirectional flow of said suspension within said detection chamber.

According to one embodiment the induction of passing the (optimum) detection area as an average particle population.

In one preferred embodiment of the invention the speed of the particle within the unidirectional flow of said suspension within said detection chamber is adjustably controlled on a constant speed level.

According to one embodiment said exposing step comprises the use of high frequency excitation by means of one or more excitation sources.

In one embodiment said detecting comprises high frequency fluorescence acquisition, especially chlorophyll high frequency fluorescence acquisition, of said emitted signals.

According to one embodiment a interpretation of the superimposed signal is provided, wherein said signal interpretation is based on specific fluorescence wavelength, the ratio between various emitted fluorescence, the frequency and/or amplitude of the scan, the shapes of peaks, their area and/or height or the like.

It is preferred that the detection of micro particles is based on evaluating of changes at a physiological level of said microparticles within said sample.

The sensing chamber is a heat insulated mixing chamber allowing unidirectional flow generation by means of a mixing device of said system thereby providing that the sample passes the area of detection at a constant adjustable speed.

### BRIEF DESCRIPTION OF THE DRAWINGS

The invention is herein described, by way of example only, with reference to the accompanying drawings, wherein:
- Fig.1: shows a system according to the present invention;
- Fig.2: describes a schematically representation of the detection principle according with the present invention;
- Fig. 3: shows a fluorescence scan during a detection mode according to the invention;
- Fig. 4: schematically depicts the analysis mode acquisition of phycocyanin fluorescence induced in the unicellular culture of chroococcal cyanobacteria Microcystis PCC7806 according to the present invention;
- Fig. 5: shows a chlorophyll fluorescence scan of unicellular cyanobacterial strain PCC7806 according to the invention;
- Fig.6: shows a chlorophyll fluorescence of the green alga Chlorella vulgaris according to the invention, wherein the chlorophyll fluorescence of the green alga Chlorella vulgaris is depicted. The scan shows a stochastic response with an apparent randomness due to the specifics of the targeted biological system in the analysis mode, acquisition frequency 4Hz;
- Fig. 7: shows a deterministic response of phycocyanin excitation in unicellular strain PCC7806 in accordance with the present invention;
- Fig. 8: describes a deterministic response of the filamentous Anabaena flos-aquae from natural bloom according to the invention; and
- Fig. 9: shows changes or variations in fluorescence intensity due to the application of oxidative stress (H2O2) on M. aeruginosa (Cyanobacteria) cells according to the inventive method.

### DETAILED DESCRIPTION OF THE INVENTION

Fig. 1 shows a simplistic design of the components of the system according to the present invention. The system comprises a radiation source and a detector which are according to one embodiment of the invention implemented as fluorescence sensors 1. Further the systems includes a pump 2, a sensing chamber 3, a recording device 4, a inflow valve 5, a outflow valve 6, a mixing device 7 and control electronics 8, for instance a computer or the like.

According to one embodiment the sensing/mixing chamber 3 is optimized to a volume large enough to contain a representative sample of objects of analysis and to minimize the undesired light scattering.

The sensors 1 may be submersible chlorophyll and phycocyanin sensors according to one embodiment and the excitation light frequency might be >250Hz, the fluorescence data acquisition frequency may be over 4 Hz and the unidirectional stream (particle) velocity in sensing/mixing chamber (hereafter the sensing chamber) 3 may be less than < 10⁻² m/s.

Data acquisition frequencies and particle velocity may be adjustable according to the size of particles.

The method and device according to invention gives various possibilities of implementation; portable version, laboratory version as well as the recessed version.

Established and frequently used fluorescence techniques for detection and identification of organisms and particles in suspension are usually based on the analysis of individual units (e.g. Flow cytometry, Fluorescence-activated/assisted cell sorting, Coulter Counter) from which the conclusions about the population are drawn. These analyses are highly dependent on the nature and in particular on the size of the particle, wherein large particles and the formation of aggregates represent a particular obstacle. The formation of aggregates occurring in natural environment is a frequent phenomenon that bears information about interactions. Small particles often tend to aggregate formation (e.g. nanoparticles as inorganic example). Single cells grow to form colonies or filaments, which can additionally associate in a set of various usually, predetermined shapes. The association and dissociation of particles depend on physical, chemical and environmental factors. By forced breaking of these structures in order to obtain single particles suitable for analysis basic information about the interactions between elements under investigation may be lost.

Micro-particles including small organisms in natural environment usually persist in suspension due to turbulence of various origins. The persistence of micro-particles in suspension is important because in this state they have a relevant biological activity regardless of their nature.

The method and device system according to the invention allows the maintenance of particles in suspension due to the unidirectional flow with no interference with their structure. The slow mixing in the sensing chamber transforms the highly turbulent flow in a steady unidirectional flow that passes the detection system. Photodiodes detect the average signal additionally carrying the information from the area of maximal detection [0006] (Figure 2). The detector forwards the average signal containing additional information on the morphological and physiological characteristics of micro-particles.

### Example: Phytoplankton and cvanobacterial blooms detection and discrimination

Quantitative and qualitative phytoplankton determination is a valuable indicator of environmental water quality and the concentration of photosynthetic pigments is an established measure for the amount of phytoplankton in the water column.

Traditional methods of phytoplankton monitoring are time-consuming, require highly trained specialists and are therefore cost demanding. There are several disadvantages of the prescribed and usually adopted sampling techniques as well. The sampling sites and the frequency of sampling are arbitrarily defined representing and additional problem particularly in deeper water bodies. The analysis of a large number of samples is time-consuming and the obtained information is frequently no longer relevant especially in the case of harmful algal blooms early warning. These facts raise the need of low cost solutions that give faster and higher spatiotemporal resolution and real time information on the changes in plankton population. The use of the method and device system according to the invention can upgrade the traditional monitoring providing quantitative and qualitative data on the phytoplankton community in real time.

The method and system according to the invention allows simple and rapid screening of phytoplankton and bacterioplankton (cyanobacteria) bloom samples by using pulse modulated monochromatic light excitation as a non-invasive method. It enables to study species and strains from culture as well as phytoplankton and bacterioplankton samples from natural environment.

The system device according to invention in this example of application is composed of two (chlorophyll and phycocyanin excitation) monochromatic emission light sources with corresponding detection to discriminate between phytoplankton and bacterioplankton.

The preferred embodiment of the system according to the invention may be suitable for the deployment in natural environment. That is, the portable version can be also mounted on a robotic vessel as recessed version. It consists of a pump that delivers the lake water to the sensing chamber equipped with fluorescence sensors.

In the following measuring and sampling strategy when the system is used as a recessed version is described.

By adjusting the data acquisition frequency the device is able to operate in two basic modes; Detection mode and Analysis mode. While navigating along a predetermined transect the pump delivers the water to the sensing chamber for continuous fluorescence detection at low data acquisition frequency (Detection mode). When the bloom is detected or major changes in the fluorescence are recorded the inflow to the sensing chamber is interrupted and slow unidirectional flow induced to measure the fluorescence of the average sample at high data acquisition frequency (Analysis mode). The sample can be collected and preserved for further taxonomic analysis in the laboratory. The strategy can be applied for horizontal or vertical of plankton monitoring.

### Detection Mode

The quality of horizontal or vertical low frequency data acquisition during detection mode depends on the speed of travel and/or the pumping rate through the sensing chamber. The distortion originates from the current position/distance of the inlet, travelling speed and the retention time in the sensing chamber. The distortion can be corrected using data from Analysis mode. The results obtained from detection mode low frequency acquisition show the vertical or horizontal fluorescence distribution. The detection mode allows higher speed of travel and large area of coverage.

### Detection mode data interpretation

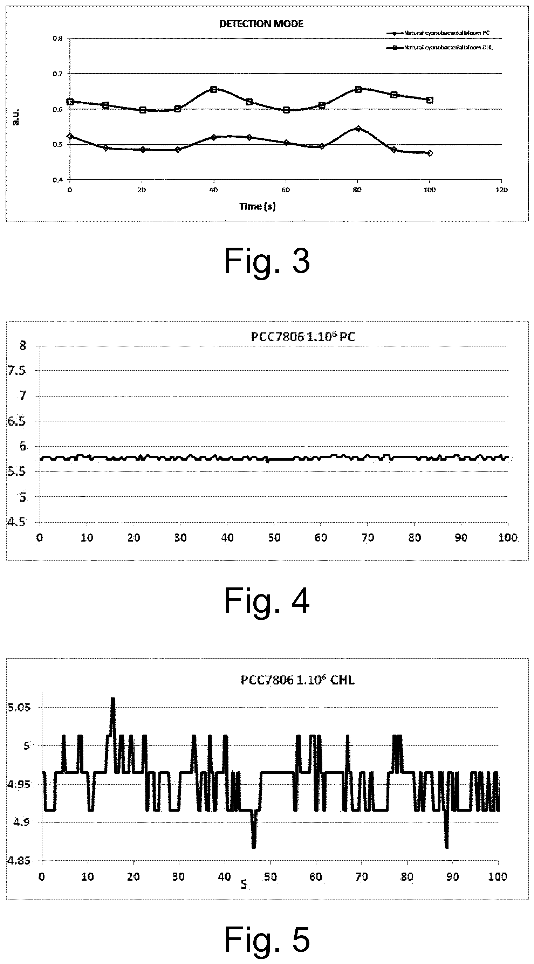

From the obtained data a fluorescence distribution profile can be reconstructed. In most cases the information relates mainly to the abundance and distribution of plankton and to a lesser extent to their properties, which is shown in Fig. 3, wherein a fluorescence scan in detection mode obtained from two sensors (chlorophyll and phycocyanin) is depicted. The cyanobacterial bloom from the natural environment was composed of over 90% Microcystis sp. colonies biomass.

### Analysis mode

The analysis mode is performed on the sample trapped in the sensing chamber. The inlet and outlet valves are closed down and the trapped sample homogenously dispersed maintaining the particles in suspension with a slow unidirectional flow. The unidirectional flow is generated as a vortex flow by means of a magnetic stirrer or by an appropriate implementation of the inflow.

### Analysis mode data interpretation

The data derive from sequential snapshots of the random population of particles occupying the non-homogeneous area of detection (Fig. 2). With reference to fig. 2 a simplistic representation of detection of two signals is shown, namely the average signal that depends on particle concentration with the superimposed signal that derives from the area of optimal detection.

In an ideally dispersed homogeneous population such as the solution of molecules gives a linear scan of the fluorescence signal. In the case of ideally dispersed particles the signal retains its linearity with occasional deviations from the average value due to fluorescence signal derived from the particles occupying the ideal position of detection. The bigger the particle or its fluorescence the larger is the deviation (amplitude) from the average signal (Fig.2).

The fluorescence signal is therefore composed of a basic signal deriving from the average particle population with superimposed deviations due to the specific morphophysiological characteristics of the population.

The average signal in the analysis mode shows constant deviations from the average value due to different particle distribution in each "snapshot" (Fig. 2 and 4), wherein Fig. 4 schematically depicts the analysis mode acquisition of phycocyanin fluorescence induced in the unicellular culture of chroococcal cyanobacteria Microcystis PCC7806 by an acquisition frequency of 4Hz.

In the case of autotrophs both chlorophyll and phycocyanin induced fluorescence show typical patterns that depend on the size, shape, organisation and physiological traits of the average population, shown with reference to Figs. 5-9.

### Description of the fluorescence scan

The obtained fluorescence response scans can be classified in two basic categories. The scans obtained from the excitation of cyanobacteria demonstrate a deterministic response, with the signal intensity evenly stepwise increasing and decreasing with the same value (e.g. Fig. 5).

With reference to Fig. 5 chlorophyll fluorescence scan of unicellular cyanobacterial strain PCC7806 is shown. The scan shows a deterministic response where the signal increases and decreases with an exact intesity value according to the analysis mode, wherein the acquisition frequency is 4Hz.

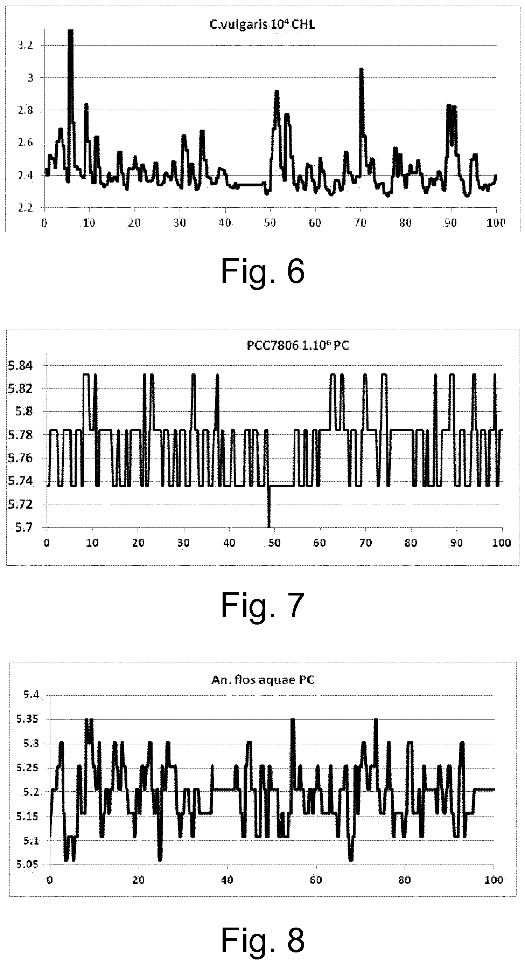

On the other hand the chlorophyll excitation of phytoplankton gives a stochastic response with an apparent randomness due to the differences between the targeted biological systems (e.g. Fig. 6).

### Examples

### a) The influence of size and physiology on chlorophyll fluorescence.

Comparing the chlorophyll fluorescence signal from two coccal organisms such as the green alga Chlorella vulgaris (Fig. 6) and unicellular cyanobacteria PCC7806 (Fig. 5) pronounced differences can be noticed. Both organisms are of similar average diameter with the difference that the cyanobacterial population is more or less homogeneous in size, while the green algal cells are of different sizes. The fluorescence signal from single cell cyanobacteria is uniform and steady in contrast to Chlorella where the signal is of varying intensity occasionally reaching higher values (compare Figs. 5 and 6).

By using two excitation wavelengths according to the invention it can be discriminated between green algae and cyanobacteria. In green algae population only a clear chlorophyll fluorescence is induced while cyanobacteria exhibit both chlorophyll and phycocyanin fluorescence.

### b) The influence of shape on phycocyanin fluorescence.

Unicellular strain PCC7806 shows a deterministic response of phycocyanin excitation (Fig. 7) similarly to the response of the filamentous cyanobacteria Anabaena flos-aquae (Fig. 8) with the difference that the filaments produce higher peaks with more sequential equal increments and diminishments in fluorescence.

### c) Fluorescence response to stress

The yield of fluorescence in phototrophs is influenced in a very complex manner by events related to photosynthesis as well as those that interfere with the transport of energy.

The optical properties of phytoplankton and bacterioplankton associated with fluorescence depend on
1) the distribution of different sizes of phytoplankton in the sample,
2) the distribution and size of chloroplasts inside the cell,
3) the organization thylakoids inside the chloroplast,
4) the organization of thylakoids inside the cell (Cyanophyta , Prochlorophyta),
6) the organization of the photosynthetic system including photosystem I (PSI), PSII, light harvesting complexes (LHC), reaction centres, sub-antennae and 7) the organization of PSU inside the thylakoids.

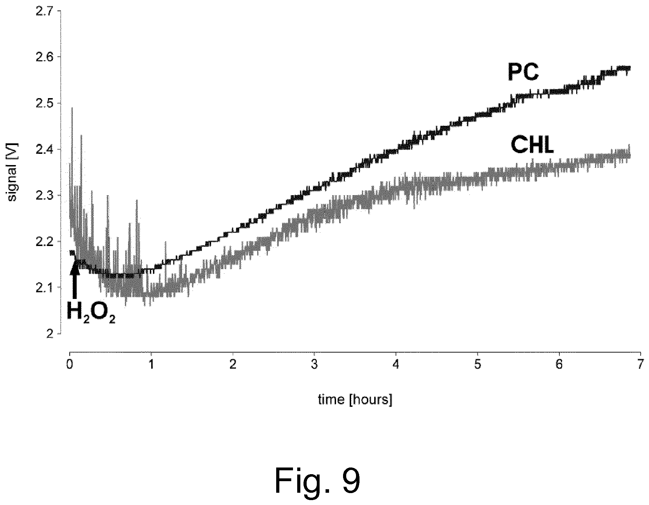

A further example shows the influence of oxidative stress on chlorophyll and phycocyanin fluorescence in cyanobacteria with reference to Fig. 9.

## Claims

1. A method for simultaneous determination of microparticle concentration and their morphological and physiological traits in a sample, said method comprising the steps of:
- Providing said sample in a sensing chamber with a detection system;
- Exposing said sample to predefined excitation wavelengths in said sensing chamber;
- Simultaneously detecting emitted signals of said sample in reaction of said exposing step, wherein an area of detection comprises an area of maximum sensitivity of a detector;
- Calculating an average signal intensity on the basis of the detected signals, wherein said average signal intensity corresponds to a microparticle concentration; and
- Determining the microparticle concentration of said sample and their morphological and physiological traits in a simultaneous manner on the basis of said average signal intensity wherein said determining step comprises determining the microparticle concentration of said sample on the basis of said average signal intensity, wherein the detected signals bear the information about the composition, size, morphological and physiological characteristics of the micro-particles currently located in the area of maximum sensitivity of the detector wherein said providing step comprises obtaining said sample by delivering it in said sensing chamber adapted to create a uniform distribution of particles maintaining them in suspension and forcing them in an unidirectional flow that passes said detection system, said uniform distribution and said unidirectional flow being provided by means of a mixing device of said system that mixes the sample in the sensing chamber thereby providing that the sample passes the area of detection at a constant adjustable speed.

2. Method according to any of the preceding claims, wherein said simultaneous determination of micro-particles concentration, their basic morphological characteristics and physiological traits is performed in a real time manner on the basis of predetermined digitalized average signal libraries.

3. Method according to any of the preceding claims, wherein said simultaneous determination is performed by simultaneous detection of stress on optical properties of photobionts on population level of said sample.

4. Method according to any of the preceding claims, wherein a homogeneous dispersion and maintenance of said micro-particles in suspension is ensured by inducing an unidirectional flow of said suspension within said detection chamber.

5. Method according to any of the preceding claims, wherein the induction of passing the (optimum) detection area is defined as an average particle population.

6. Method according to any of the preceding claims, wherein the speed of the particle within the unidirectional flow of said suspension within said detection chamber is adjustably controlled on a constant speed level.

7. Method according to any of the preceding claims, wherein said exposing step comprises the use of high frequency excitation by means of one or more excitation sources.

8. Method according to any of the preceding claims, wherein said detecting comprises high frequency fluorescence acquisition, especially chlorophyll high frequency fluorescence acquisition, of said emitted signals.

9. Method according to any of the preceding claims, wherein said detecting comprises high frequency fluorescence acquisition, especially phycocyanin high frequency fluorescence acquisition, of said emitted signals.

10. Method according to any of the preceding claims, wherein an interpretation of the superimposed signal is provided, said signal interpretation is based on specific fluorescence wavelength, the ratio between various emitted fluorescence, the frequency and/or amplitude of the scan, the shapes of peaks, their area and/or height or the like.

11. Method according to any of the preceding claims, wherein said detection is based on evaluating of changes at a physiological level of said microparticles within said sample.

12. A system for simultaneous detection of organisms, inorganic and other fluorescent micro-particles in suspension and their morphological and physiological traits adapted to perform the method according to the preceding claims, comprising:
- A sensing chamber for receiving a sample;
- A pump for delivering the sample to be analyzed at an adjustable flow rate;
- One or more pulse modulated sensors with specific excitation and detection wavelengths to detect the emitted fluorescence signal of the sample positioned in said sensing chamber; and
- Means for storing and analyzing the fluorescence signal
- **characterized in that** said sensing chamber is a heat insulated mixing chamber allowing unidirectional flow generation by means of a mixing device of said system thereby providing that the sample passes the area of detection at a constant adjustable speed, wherein said area of detection comprises an area of maximum sensitivity.

## Patentansprüche

1. Verfahren zur gleichzeitigen Bestimmung von Mikropartikelkonzentration und deren morphologischen und physiologischen Merkmalen in einer Probe, wobei das Verfahren die Schritte umfasst:
- Bereitstellen der Probe in eine Erfassungskammer mit einem Erfassungssystem;
- Aussetzen der Probe vordefinierten Anregungswellenlängen in der Erfassungskammer;
- gleichzeitiges Erfassen von emittierten Signalen der Probe in Reaktion auf den Aussetzungsschritt, wobei eine Erfassungsfläche eine Fläche der maximalen Empfindlichkeit eines Detektors umfasst;
- Berechnen einer mittleren Signalintensität auf der Basis der erfassten Signale, wobei die mittlere Signalintensität einer Mikropartikelkonzentration entspricht; und
- Bestimmen der Mikropartikelkonzentration der Probe und deren morphologischen und physiologischen Merkmalen gleichzeitig auf der Basis der mittleren Signalintensität, wobei der Bestimmungsschritt das Bestimmen der Mikropartikelkonzentration der Probe auf der Basis der mittleren Signalintensität umfasst, wobei die erfassten Signale die Informationen zu Zusammensetzung, Größe, morphologischen und physiologischen Eigenschaften der Mikropartikel tragen, die sich gegenwärtig in der Fläche der maximalen Empfindlichkeit des Detektors befinden,
- wobei der Bereitstellungsschritt das Erhalten der Probe umfasst, indem sie der Erfassungskammer zugeführt wird, die dazu angepasst ist, eine gleichmäßige Verteilung von Partikeln zu erzeugen, sie in Suspension zu halten und sie in eine unidirektionale Strömung zu zwingen, die das Erfassungssystem passiert, wobei die gleichmäßige Verteilung und die unidirektionale Strömung mithilfe einer Mischeinrichtung des Systems bereitgestellt werden, die die Probe in der Erfassungskammer mischt, wodurch dafür gesorgt wird, dass die Probe die Erfassungsfläche mit einer konstanten einstellbaren Geschwindigkeit passiert.

2. Verfahren nach einem der vorhergehenden Ansprüche, wobei die gleichzeitige Bestimmung der Mikropartikelkonzentration und deren grundlegenden morphologischen Eigenschaften und physiologischen Merkmalen in Echtzeit auf der Basis vorbestimmter digitalisierter Mittelwertsignalbibliotheken durchgeführt wird.

3. Verfahren nach einem der vorhergehenden Ansprüche, wobei die gleichzeitige Bestimmung durchgeführt wird durch die gleichzeitige Erfassung von Stress auf die optischen Eigenschaften von Photobionten auf das Populationsniveau der Probe.

4. Verfahren nach einem der vorhergehenden Ansprüche, wobei eine homogene Dispersion und das Halten der Mikropartikel in Suspension durch Induzieren einer unidirektionalen Strömung der Suspension innerhalb der Erfassungskammer sichergestellt wird.

5. Verfahren nach einem der vorhergehenden Ansprüche, wobei die Induktion des Passierens der (optimalen) Erfassungsfläche als eine mittlere Partikelpopulation definiert wird.

6. Verfahren nach einem der vorhergehenden Ansprüche, wobei die Geschwindigkeit des Partikels innerhalb der unidirektionalen Strömung der Suspension innerhalb der Erfassungskammer auf ein konstantes Geschwindigkeitsniveau einstellbar gesteuert wird.

7. Verfahren nach einem der vorhergehenden Ansprüche, wobei der Aussetzungsschritt die Verwendung von Hochfrequenzanregung mithilfe von einer oder mehreren Anregungsquellen umfasst.

8. Verfahren nach einem der vorhergehenden Ansprüche, wobei das Erfassen eine Hochfrequenzfluoreszenzerfassung, insbesondere Hochfrequenzfluoreszenzchlorophyllerfassung, der emittierten Signale umfasst.

9. Verfahren nach einem der vorhergehenden Ansprüche, wobei das Erfassen eine Hochfrequenzfluoreszenzerfassung, insbesondere Hochfrequenzfluoreszenzphycocyaninerfassung, der emittierten Signale umfasst.

10. Verfahren nach einem der vorhergehenden Ansprüche, wobei eine Interpretation des überlagerten Signals bereitgestellt wird, die Signalinterpretation auf einer spezifischen Fluoreszenzwellenlänge, dem Verhältnis zwischen verschiedenen emittierten Fluoreszenzen, der Frequenz und/oder Amplitude der Abtastung, den Formen der Spitzen, ihrer Fläche und/oder Höhe oder dergleichen basiert.

11. Verfahren nach einem der vorhergehenden Ansprüche, wobei die Erfassung auf dem Evaluieren von Änderungen auf einem physiologischen Niveau der Mikropartikel innerhalb der Probe basiert.

12. System zur gleichzeitigen Erfassung von Organismen, anorganischen und anderen fluoreszenten Mikropartikeln in Suspension und deren morphologischen und physiologischen Merkmalen, das dazu angepasst ist, das Verfahren nach den vorhergehenden Ansprüchen durchzuführen, umfassend:
- eine Erfassungskammer zum Empfangen einer Probe;
- einer Pumpe zum Zuführen der zu analysierenden Probe mit einer einstellbaren Strömungsgeschwindigkeit;
- einen oder mehrere pulsmodulierte Sensoren mit spezifischen Anregungs- und Erfassungswellenlängen, um das emittierte Fluoreszenzsignal der in der Erfassungskammer positionierten Probe zu erfassen; und
- Mittel zum Speichern und Analysieren des Fluoreszenzsignals
- **dadurch gekennzeichnet, dass** die Erfassungskammer eine wärmeisolierte Mischkammer ist, die eine Erzeugung einer unidirektionalen Strömung durch eine Mischeinrichtung des Systems ermöglicht, wodurch dafür gesorgt wird, dass die Probe die Erfassungsfläche mit einer konstanten einstellbaren Geschwindigkeit passiert, wobei die Erfassungsfläche eine Fläche maximaler Empfindlichkeit umfasst.

## Revendications

1. Procédé de détermination simultanée de la concentration de microparticules et de leurs traits morphologiques et physiologiques dans un échantillon, ledit procédé comprenant les étapes consistant à :
- fournir ledit échantillon dans une chambre de détection avec un système de détection ;
- exposer ledit échantillon à des longueurs d'onde d'excitation prédéfinies dans ladite chambre de détection ;
- détecter simultanément les signaux émis par ledit échantillon en réaction à ladite étape d'exposition, une zone de détection comprenant une zone de sensibilité maximale d'un détecteur ;
- calculer une intensité moyenne du signal sur la base des signaux détectés, ladite intensité moyenne du signal correspondant à une concentration de microparticules ; et
- déterminer la concentration de microparticules dudit échantillon et leurs traits morphologiques et physiologiques d'une manière simultanée sur la base de ladite intensité moyenne du signal, ladite étape de détermination comprenant la détermination de la concentration de microparticules dudit échantillon sur la base de ladite intensité moyenne du signal, les signaux détectés portant les informations sur la composition, la taille, les caractéristiques morphologiques et physiologiques des microparticules actuellement situées dans la zone de sensibilité maximale du détecteur,
- dans lequel ladite étape de fourniture comprend l'opération consistant à obtenir ledit échantillon en le délivrant dans ladite chambre de détection adaptée pour créer une distribution uniforme de particules les maintenant en suspension et les entraînant dans un écoulement unidirectionnel qui passe devant ledit système de détection, ladite distribution uniforme et ledit écoulement unidirectionnel étant fournis au moyen d'un dispositif de mélange dudit système qui mélange l'échantillon dans la chambre de détection, permettant ainsi que l'échantillon passe devant la zone de détection à une vitesse constante réglable.

2. Procédé selon l'une quelconque des revendications précédentes, dans lequel ladite détermination simultanée de la concentration de microparticules, de leurs caractéristiques morphologiques de base et de leurs traits physiologiques est effectuée en temps réel sur la base de banques de signaux moyens prédéterminés numérisés.

3. Procédé selon l'une quelconque des revendications précédentes, dans lequel ladite détermination simultanée est effectuée par détection simultanée d'une contrainte sur des propriétés optiques de photobionts sur le niveau de population dudit échantillon.

4. Procédé selon l'une quelconque des revendications précédentes, dans lequel une dispersion homogène et le maintien desdites microparticules en suspension sont assurés en induisant un écoulement unidirectionnel de ladite suspension à l'intérieur de ladite chambre de détection.

5. Procédé selon l'une quelconque des revendications précédentes, dans lequel l'induction du passage devant la zone de détection (optimale) est définie comme une population moyenne de particules.

6. Procédé selon l'une quelconque des revendications précédentes, dans lequel la vitesse de la particule à l'intérieur de l'écoulement unidirectionnel de ladite suspension à l'intérieur de ladite chambre de détection est régulée à un niveau de vitesse constant.

7. Procédé selon l'une quelconque des revendications précédentes, dans lequel ladite étape d'exposition comprend l'utilisation d'une excitation à haute fréquence au moyen d'une ou plusieurs sources d'excitation.

8. Procédé selon l'une quelconque des revendications précédentes, dans lequel ladite détection comprend l'acquisition de fluorescence à haute fréquence, en particulier l'acquisition de fluorescence à haute fréquence de chlorophylle, desdits signaux émis.

9. Procédé selon l'une quelconque des revendications précédentes, dans lequel ladite détection comprend l'acquisition de fluorescence à haute fréquence, en particulier l'acquisition de fluorescence à haute fréquence de phycocyanine, desdits signaux émis.

10. Procédé selon l'une quelconque des revendications précédentes, dans lequel une interprétation du signal superposé est fournie, ladite interprétation du signal est basée sur une longueur d'onde de fluorescence spécifique, le rapport entre diverses fluorescences émises, la fréquence et/ou l'amplitude du balayage, les formes de pics, leur aire et/ou hauteur ou leurs équivalents.

11. Procédé selon l'une quelconque des revendications précédentes, dans lequel ladite détection est basée sur l'évaluation de modifications à un niveau physiologique desdites microparticules à l'intérieur dudit échantillon.

12. Système de détection simultanée d'organismes, de microparticules inorganiques et autres fluorescentes en suspension et de leurs traits morphologiques et physiologiques, adapté pour effectuer le procédé selon les revendications précédentes, comprenant :
- une chambre de détection pour recevoir un échantillon ;
- une pompe pour délivrer l'échantillon à analyser à un débit réglable ;
- un ou plusieurs capteurs à modulation d'impulsion avec des longueurs d'onde d'excitation et de détection spécifiques pour détecter le signal de fluorescence émis de l'échantillon positionné dans ladite chambre de détection ; et
- des moyens pour stocker et analyser le signal de fluorescence,
- **caractérisé en ce que** ladite chambre de détection est une chambre de mélange isolée thermiquement permettant la création d'un écoulement unidirectionnel au moyen d'un dispositif de mélange dudit système, permettant ainsi que l'échantillon passe devant la zone de détection à une vitesse constante réglable, ladite zone de détection comprenant une zone de sensibilité maximale.
